# EUROPÄISCHE PATENTANMELDUNG

(11) **EP 2 228 327 A1**
(43) Veröffentlichungstag der Anmeldung: **15.09.2010**
(21) Anmeldenummer: 09155118.4
(22) Anmeldetag: 13.03.2009
(51) Int. Cl.: B65G 47/26, B65G 47/91, B65B 35/38

(54) **Vorrichtung zur Übergabe von Produkten**

(71) Anmelder: Uhlmann Pac-Systeme GmbH & Co. KG, 88471 Laupheim (DE)
(72) Erfinder: Arb, Rudi, 88471 Laupheim (DE); Forst, Lutz, 88471 Laupheim (DE)
(74) Vertreter: Wächter, Jochen

(57) **Zusammenfassung**

Die Vorrichtung zur Übergabe von streifenförmigen Produkten (8) umfasst eine Zuführeinheit (2) und eine Abführeinheit (6) und eine dazwischen angeordnete Spreizvorrichtung (4). Die Spreizvorrichtung (4) weist eine Mehrzahl von nebeneinander angeordneten Übergabeelementen (16) auf, welche zwischen einer Aufnahmeposition zur Aufnahme der von der Zuführeinheit (2) geförderten Produkte (8) und einer Abgabeposition zur Abgabe der Produkte (8) an die Abführeinheit (6) derart bewegbar sind, dass benachbarte Übergabeelemente (16) in der Abgabeposition einen größeren vorbestimmten Abstand zueinander aufweisen als in der Aufnahmeposition.

## Beschreibung

Derartige Übergabevorrichtungen sind in verschiedensten Bereichen der Technik bekannt. Insbesondere bei der Verarbeitung von Blisterstreifen in der pharmazeutischen Industrie ist es jedoch bislang nicht möglich, als schlecht eingestufte Blisterstreifen während der Übergabe auszusortieren. Außerdem liegen die bislang nach herkömmlichen Verfahren zu übergebenden Blisterstreifen so eng aneinander, dass die weitere Verarbeitung erschwert wird.

Der Erfindung liegt daher die Aufgabe zugrunde, eine Vorrichtung zur Übergabe von Produkten zu schaffen, bei der der Zugriff auf jedes einzelne Produkt vereinfacht wird und gleichzeitig die Trennung von guten und schlechten Produkten möglich ist, sowie ein entsprechendes Verfahren zum Übergeben von Produkten anzugeben.

Diese Aufgabe wird durch die Merkmale des Anspruchs 1 bzw. des Anspruchs 13 gelöst.

Erfindungsgemäß weist die Vorrichtung zur Übergabe von Produkten, insbesondere streifenförmigen Produkten, eine Zuführeinheit und eine Abführeinheit auf. Außerdem umfasst die Vorrichtung zwischen der Zuführeinheit und der Abführeinheit eine Spreizvorrichtung, wobei die mittels der Zuführeinheit zur Spreizvorrichtung geförderten Produkte an die Abführeinheit abgebbar sind. Die Spreizvorrichtung weist dabei eine Mehrzahl von nebeneinander angeordneten Übergabeelementen auf, welche zwischen einer Aufnahmeposition zur Aufnahme der von der Zuführeinheit geförderten Produkte und einer Abgabeposition zur Abgabe der Produkte an die Abführeinheit derart bewegbar sind, dass benachbarte Übergabeelemente in der Abgabeposition einen größeren vorbestimmten Abstand zueinander aufweisen als in der Aufnahmeposition.

Dadurch wird gewährleistet, dass ein einfacherer Zugriff auf jedes einzelne Produkt zur weiteren Verarbeitung erfolgen kann und gleichzeitig bereits an dieser Stelle eine Aussortierung von schlechten Produkten möglich ist.

Vor allem wenn die zu übergebenden Produkte Blisterstreifen sind, ist es vorteilhaft, dass die Übergabeelemente als sich in einer Längsrichtung erstreckende Übergabeleisten ausgebildet sind, wobei üblicherweise eine Übergabeleiste pro Blisterstreifen vorgesehen ist.

In diesem Fall weist vorzugsweise jede Übergabeleiste eine sich in der Längsrichtung erstreckende Nut und zwei sich in der Längsrichtung erstreckende seitliche Stege auf. So können die Näpfe des Blisterstreifens in der Nut geführt, ausgerichtet und leichter gehalten werden.

Für eine ausreichende Haftung der Produkte an den Übergabeelementen ist es vorteilhaft, dass die Spreizvorrichtung Mittel zum Ausbilden eines Vakuums aufweist.

Zum Zwecke der unterschiedlichen Weiterverarbeitung der einzelnen Produkte, insbesondere auch dem Aussortieren schlechter Produkte, ist es besonders vorteilhaft, dass jedem Übergabeelement eigene Mittel zum Ausbilden eines Vakuums zugeordnet sind. Damit können über ein Schieberegister alle Mittel zum Ausbilden eines Vakuums getrennt angesteuert werden.

Zur Vereinfachung des Spreizvorgangs sind die Übergabeelemente vorzugsweise miteinander verbunden.

Besonders bevorzugt ist es, dass jeweils zwei benachbarte Übergabeelemente über Spreizlaschen miteinander verbunden sind. Dadurch werden die jeweils gewünschten Abstände zwischen den einzelnen Übergabeelementen sowohl in der Aufnahmeposition als auch in der Abgabeposition auf einfache Weise definiert.

Ein weiterer Vorteil ergibt sich, wenn die Spreizlaschen Langlöcher aufweisen und jedes Übergabeelement mindestens einen Stift aufweist, der im jeweiligen Langloch geführt ist. Dadurch kann der Stift zwischen den beiden Endpositionen im Langloch geführt werden, was zur definierten Festlegung und Vereinfachung des Spreizvorgangs beiträgt.

In einer bevorzugten Ausführungsform sind die Übergabeelemente mittels eines Antriebs bewegbar, der dazu geeignet ist, die beiden äußeren Übergabeelemente relativ zueinander zu bewegen. Auf diese Weise wird mit einfachen Mitteln eine Spreizung aller miteinander verbundenen Übergabeelemente erreicht, wobei die Auffächerung schrittweise vom bewegten Übergabeelement bis hin zum stationären Übergabeelement stattfindet.

Zur Aussortierung schlechter Produkte ist die Spreizvorrichtung vorzugsweise schwenkbar ausgebildet. Dadurch kann nach Entnahme der guten Produkte durch die Abführeinheit die Spreizvorrichtung an einen Ort geschwenkt werden, wo die auf der Spreizvorrichtung verbliebenen Produkte auf einfache Weise entsorgt werden können. In einer bevorzugten Ausführungsform können die Produkte von den Übergabeelementen abgeblasen werden.

Eine auf Blisterstreifen angepasste Konstruktion ergibt sich, wenn die Zuführeinheit einen Zangenvorschub aufweist. Der Zangenvorschub greift vorzugsweise mehrere Blisterstreifen und zieht diese zu den Übergabeelementen, wo sie wieder freigegeben werden.

Ein Greifer der Abführeinheit dient zum einfachen Weitertransport der Produkte.

Das erfindungsgemäße Verfahren zum Übergeben von Produkten umfasst folgende Schritte:
- Zuführen der Produkte mittels einer Zuführeinheit zu einer Spreizvorrichtung;
- Auseinanderbewegen der Produkte in der Spreizvorrichtung durch Auseinanderbewegen von nebeneinander angeordneten Übergabeelementen; und
- Abführen der Produkte mittels einer Abführeinheit.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Perspektivansicht einer Ausführungsform der erfindungsgemäßen Vorrichtung zur Übergabe von Produkten in einer Stellung, bei der die Zuführeinheit die Produkte in Richtung der Spreizvorrichtung fördert;
- Fig. 2: ist eine schematische Perspektivansicht der Vorrichtung aus Fig. 1 in einer Stellung, bei der die Zuführeinheit die Produkte auf der Spreizvorrichtung abgelegt hat;
- Fig. 3: entspricht Fig. 2, wobei die Zuführeinheit in eine Parkposition verfahren ist;
- Fig.4: ist eine schematische Perspektivansicht der Vorrichtung aus Fig. 1, wobei die Spreizvorrichtung die Produkte auseinander gezogen hat;
- Fig. 5: entspricht Fig. 4, wobei die Spreizvorrichtung geschwenkt ist;
- Fig. 6: ist eine Darstellung eines Blisterstreifens als mögliche Produktform;
- Fig. 7: ist eine Querschnittsansicht der Zuführeinheit in einem geschlossenen Zustand des Zangenelements;
- Fig. 8: entspricht Fig. 7, wobei das Zangenelement geöffnet ist;
- Fig. 9: ist eine Ansicht von unten eines Ausführungsbeispiels der Spreizvorrichtung;
- Fig. 10: entspricht Fig. 9, wobei die Übergabeelemente auseinander gezogen sind; und
- Fig. 11: ist eine schematische Perspektivansicht eines Beispiels der Abführeinheit.

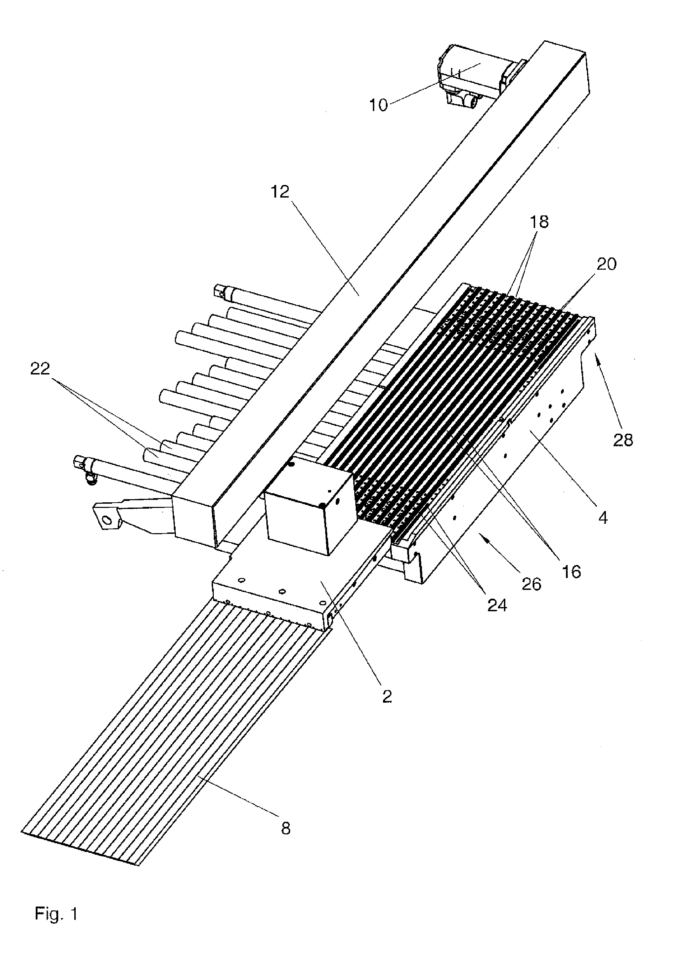

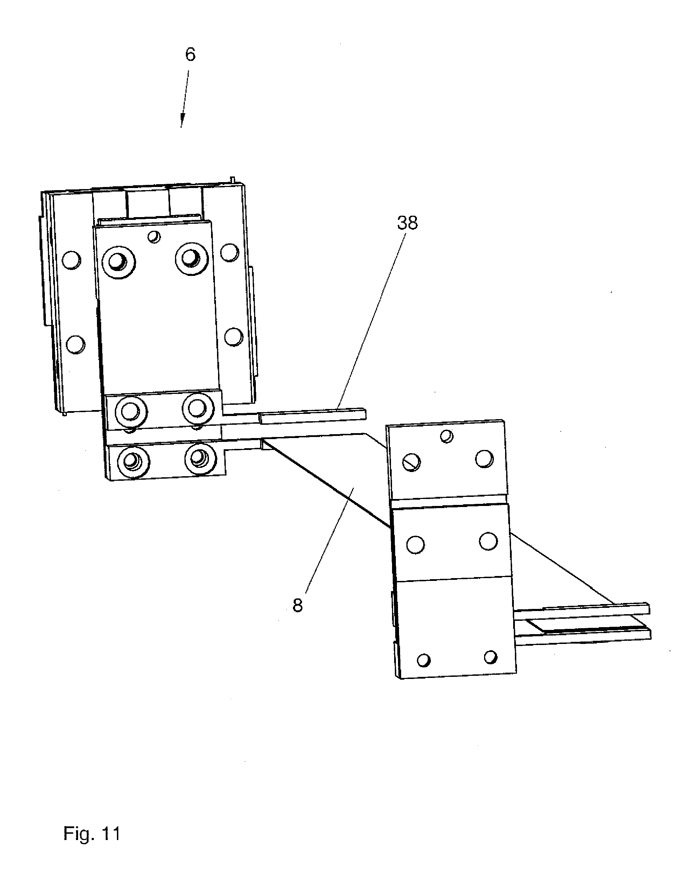

In Fig. 1 bis 5 ist eine bevorzugte Ausführungsform der erfindungsgemäßen Vorrichtung zur Übergabe von Produkten in schematischen Perspektivansichten dargestellt. Die Vorrichtung umfasst eine Zuführeinheit 2, eine Spreizvorrichtung 4 sowie eine in Fig. 1 bis 5 aus Übersichtlichkeitsgründen nicht dargestellte Abführeinheit 6 (siehe Fig. 11).

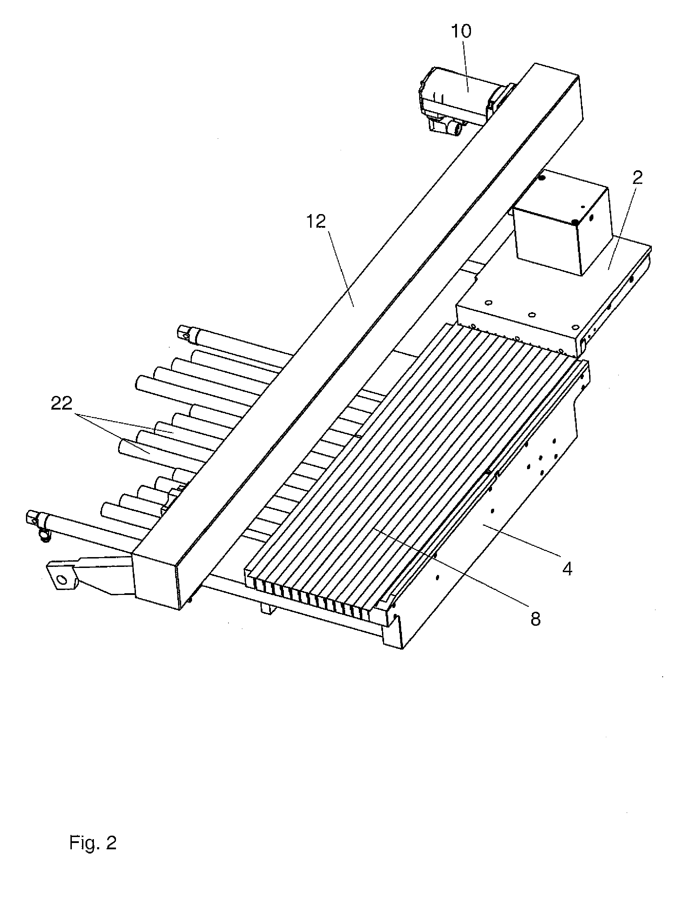

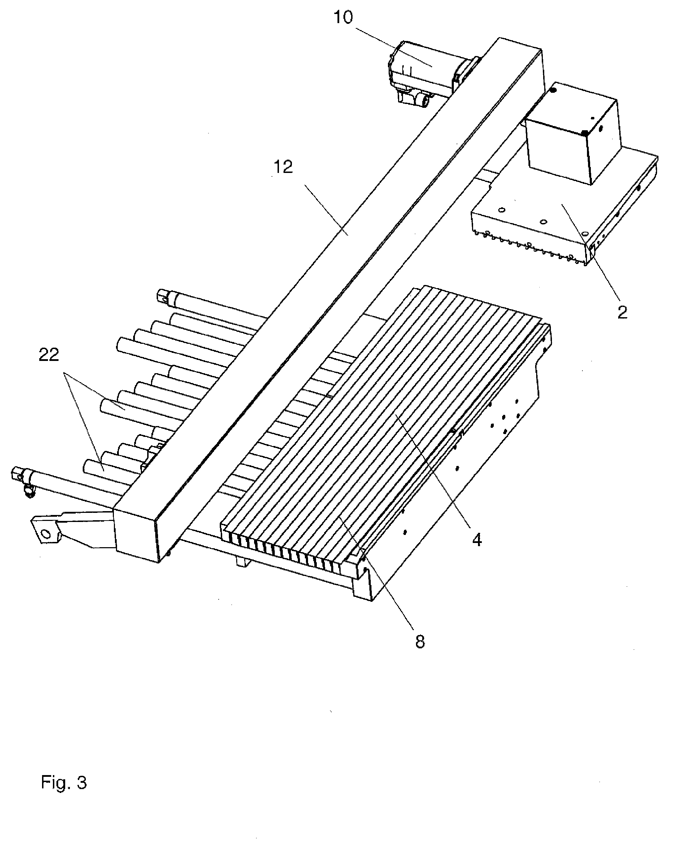

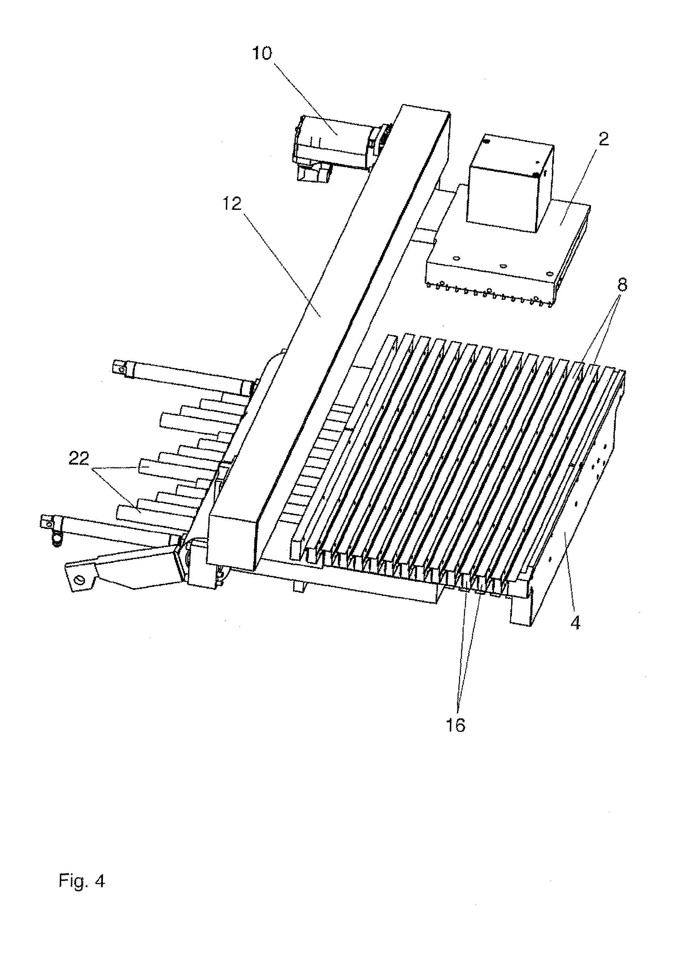

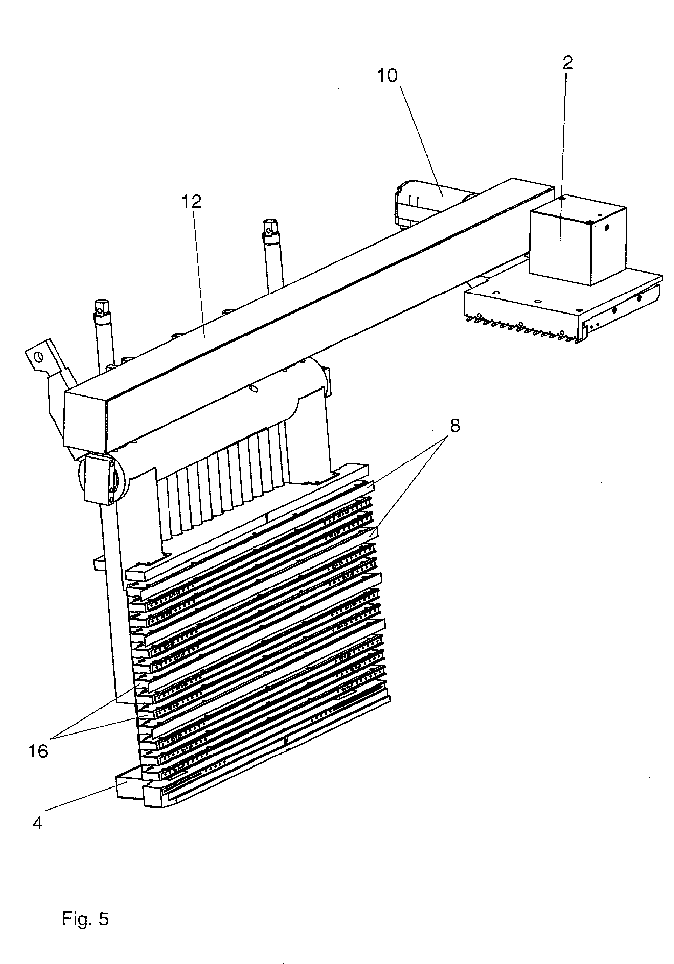

Die Zuführeinheit 2 führt die zu übergebenden Produkte 8 der Spreizvorrichtung 4 zu. Anfangs- und Endzustand dieses Zuführschrittes sind in Fig. 1 und Fig. 2 dargestellt. Anschließend kann, wie in Fig. 3 dargestellt ist, die Zuführeinheit 2 in eine Parkposition gebracht werden, woraufhin die Spreizvorrichtung 4 die Produkte 8 auseinander bewegt (Fig. 4). Als gut eingestufte Produkte 8 werden daraufhin von der Abführeinheit 6 (Fig. 11) abtransportiert und beispielsweise einer Verpackungsmaschine (nicht dargestellt) übergeben. Schließlich kann die Spreizvorrichtung 4 in eine Position geschwenkt werden, bei der eine Entsorgung als schlecht eingestufter Produkte 8 auf einfache Weise möglich ist, siehe Fig. 5. Anschließend werden die einzelnen Komponenten wieder in den Ausgangszustand gebracht und ein neuer Übergabezyklus beginnt.

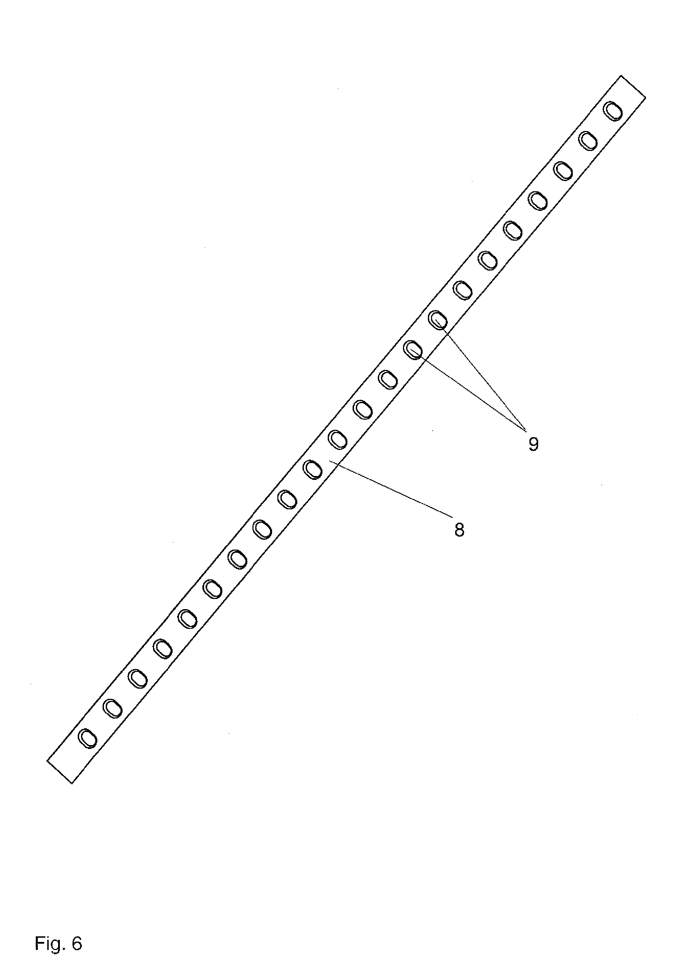

Als zu übergebende Produkte 8 kommen insbesondere Blisterstreifen in Frage. Ein derartiger Blisterstreifen 8 mit einer Reihe von Näpfen 9, in denen Tabletten oder Dragees aufgenommen sind, ist in Fig. 6 dargestellt. Es sind auch Blisterstreifen 8 mit mehreren Reihen von Näpfen 9 denkbar. Schließlich eignet sich die vorliegende Erfindung auch für die Übergabe von Produkten 8 anderer Gestalt, ohne dass vom erfinderischen Gedanken abgewichen wird.

Im dargestellten Beispielsfall ist die Zuführeinheit 2 als Zangenvorschub ausgebildet, der mittels eines Antriebs 10 in Zuführrichtung der zu übergebenden Produkte 8 bewegt werden kann. Die Bewegung erfolgt vorzugsweise linear entlang einer Schiene 12. Der Antrieb 10 ist dabei vorzugsweise als Servomotor ausgestaltet, kann aber ebenso beispielsweise als Riementrieb oder als Pneumatikzylinder gestaltet sein.

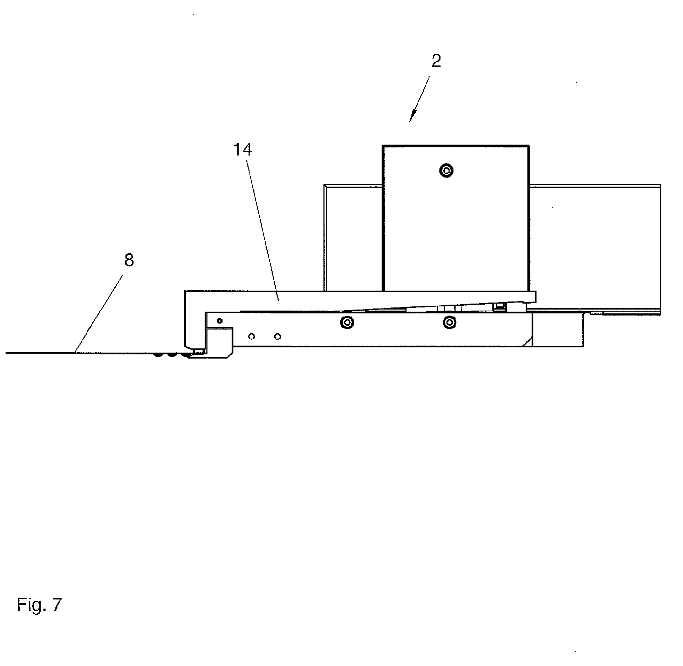

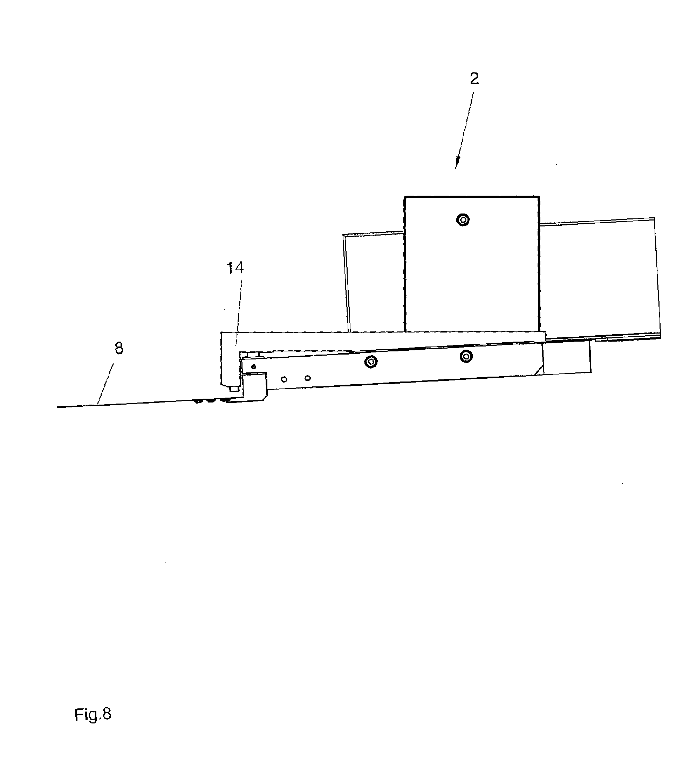

Ein Beispiel der Ausgestaltung der Zuführeinheit 2 als Zangenvorschub ist in Fig. 7 und 8 dargestellt. Dabei ist der Zangenvorschub in Fig. 7 im geschlossenen Zustand dargestellt, bei dem mehrere Blisterstreifen 8 gleichzeitig festgeklemmt sind. In der Freigabeposition für die Blisterstreifen 8 ist ein oberes Zangenteil 14 nach oben geschwenkt, wie in Fig. 8 dargestellt ist. Zum Ausgleich von Dickentoleranzen der Produkte 8 kann ein federnder Ausgleich im Zangenvorschub vorgesehen sein. Selbstverständlich kommt eine Vielzahl anderer Ausgestaltungen in Frage, mit denen die zu überführenden Produkte 8 ergriffen, transportiert und wieder freigegeben werden können.

Insbesondere bei Blisterstreifen 8, die aus der Stanze einer Blistermaschine entnommen werden sollen, ist ein Ergreifen der Blisterstreifen 8 auf einer Seite mittels der Zuführeinheit 2 besonders geeignet. In dieser Ausgestaltung liegen die einzelnen Blisterstreifen 8 eng aneinander in mehreren Reihen vor und können somit gleichzeitig mittels der Zuführeinheit 2 zur Spreizvorrichtung 4 transportiert werden. In der in Fig. 2 dargestellten Position der Zuführeinheit 2 werden die Blisterstreifen 8 wieder freigegeben und liegen somit eng nebeneinander auf der Spreizvorrichtung 4 auf.

Die Spreizvorrichtung umfasst Übergabeelemente 16, von denen jeweils eines einem Produkt 8 zugeordnet ist. Diese Übergabeelemente 16 werden nun auseinander bewegt, wodurch auch die einzelnen Produkte 8 auseinander bewegt werden. Vorzugsweise geschieht dies in einer Richtung senkrecht zur Transportrichtung der Zuführeinheit 2. Der aufgefächerte Zustand der Übergabeelemente 16 der Spreizvorrichtung 4 ist in Fig. 4 dargestellt. In dieser Position stehen die einzelnen Produkte 8 zur Abgabe an die Abführeinheit 6 bereit.

Bei Verwendung von Blisterstreifen als zu übergebende Produkte 8 sind diese vorzugsweise mit den Näpfen 9 nach unten angeordnet (Fig. 6), und jedes Übergabeelement 16 der Spreizvorrichtung 4 ist als eine sich in Längsrichtung, d. h. in Transportrichtung der Zuführeinheit 2 erstreckende Übergabeleiste ausgebildet, siehe Fig. 1. Diese Übergabeleisten weisen jeweils eine sich ebenfalls in der Längsrichtung erstreckende Nut 18 sowie zwei sich in Längsrichtung erstreckende seitliche Stege 20 auf, welche die Nut 18 seitlich begrenzen. Auf diese Weise können die Näpfe 9 des Blisterstreifens 8 in jedem Übergabeelement 16 korrekt geführt werden.

Alternativ hierzu oder zur zusätzlichen Halterung der Produkte 8 an den Übergabeelementen 16 können Mittel zum Ausbilden eines Vakuums vorgesehen sein, welche im vorliegenden Beispielsfall durch Rohrleitungen 22 sowie entsprechende Öffnungen 24 in den Übergabeelementen 16 ausgebildet sind. Dabei sind vorzugsweise jedem Übergabeelement 16 eigene Mittel zum Ausbilden eines Vakuums zugeordnet. Damit kann eine individuelle Ansteuerung der Vakuumversorgung für die einzelnen Übergabeelemente 16 gewährleistet werden, was wiederum für die Aussortierung als schlecht eingestufter Produkte 8 erhebliche Vorteile bringt. Die Mittel zum Ausbilden eines Vakuums erfordern selbstverständlich eine Vakuumpumpe (nicht dargestellt), welche über geeignete Ventile mit den einzelnen Rohrleitungen 22 in Verbindung steht. Durch das Vakuum werden die Produkte 8 mit einem leichten Unterdruck straff auf den Übergabeelementen 16 gehalten. Zur Vereinfachung der Konstruktion sind die Öffnungen 24 im dargestellten Beispielsfall in den Übergabeelementen 16 lediglich an den beiden Randbereichen 26, 28 der Übergabeelemente 16 ausgebildet. In diesem Fall ist die jeweilige Rohrleitung 22 jeweils mit dem Innenraum des hohlen Übergabeelements 16 verbunden.

Üblicherweise ist der erfindungsgemäßen Vorrichtung ein Sensor (nicht dargestellt) vorgeschaltet, welcher die einzelnen Produkte auf ihre Qualität hin überprüft, beispielsweise eine Farbkamera zur Kontrolle der Befüllung der Näpfe 9 eines Blisterstreifens 8. Mittels eines Schieberegisters (nicht dargestellt) können alle Blisterstreifen 8 einzeln durch die gesamte Vorrichtung verfolgt werden, und es wird somit sichergestellt, dass lediglich als gut eingestufte Produkte 8 über die Abführeinheit 6 der weiteren Verarbeitung zugeführt werden. Schlechte Produkte 8 hingegen verbleiben vorzugsweise auf der Spreizvorrichtung 4 und können im Anschluss an die Entnahme der guten Produkte 8 auf einfache Weise entsorgt werden. Hierzu ist die Spreizvorrichtung 4 vorzugsweise schwenkbar ausgebildet, wie in Fig. 5 dargestellt ist. Das Vakuum hält die einzelnen Produkte 8 weiterhin an den Übergabeelementen 16 fest und gibt diese erst frei, wenn die Spreizvorrichtung 4 ihre gewünschte Position erreicht hat. In dieser Position können die einzelnen Produkte beispielsweise auch über die Rohrleitungen 22 und die Öffnungen 24 mittels Druckluft abgeblasen werden.

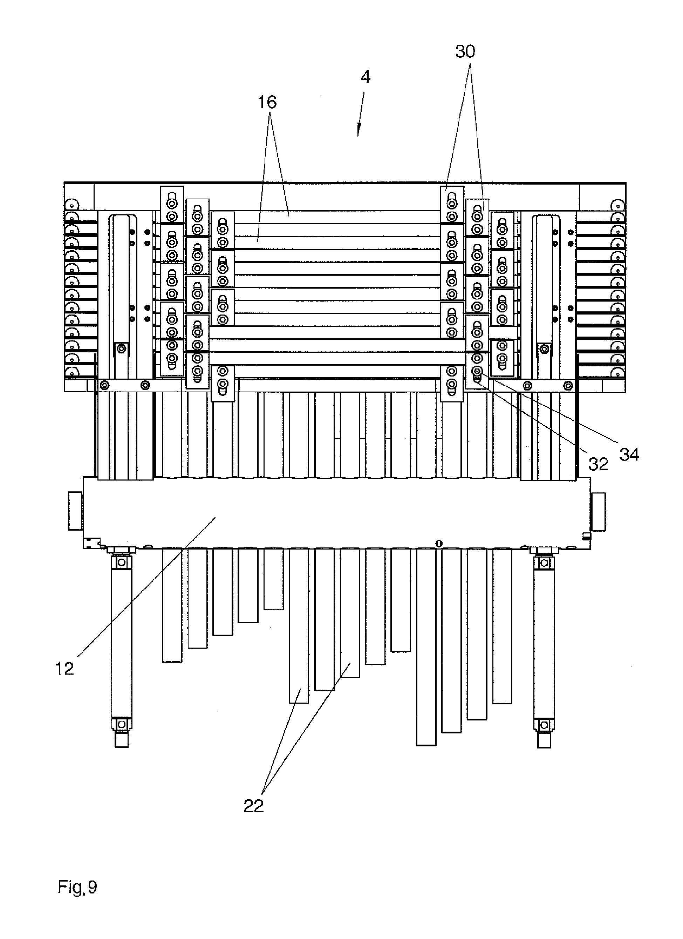

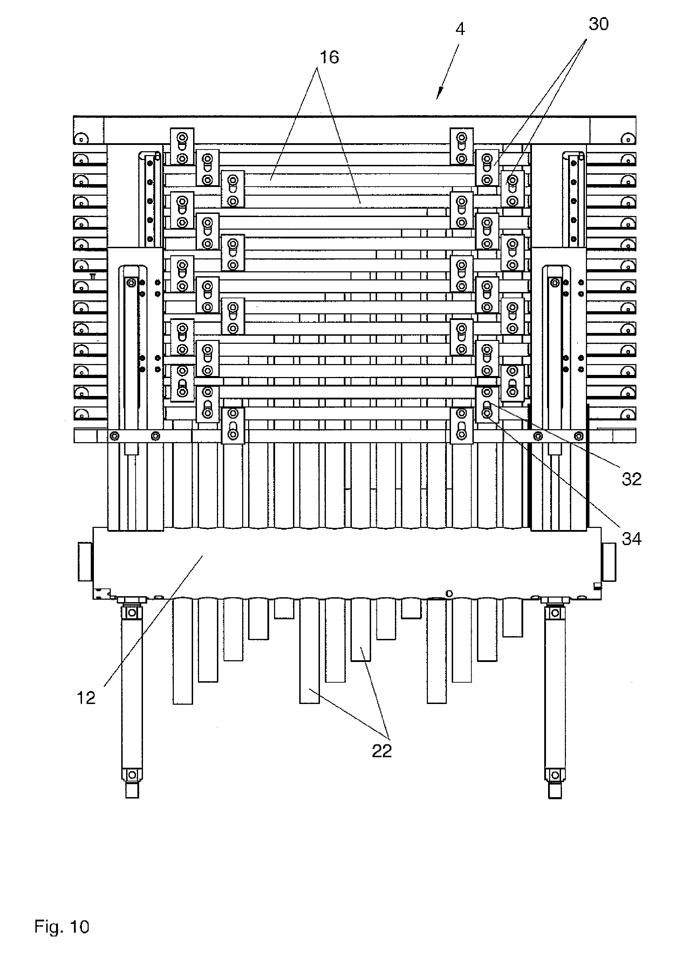

Ein Beispiel einer Detailkonstruktion der Spreizvorrichtung ist in Fig. 9 und 10 dargestellt.
Fig. 9 zeigt dabei die einzelnen Übergabeelemente 16 in einer Aufnahmeposition zur Aufnahme der von der Zuführeinheit 2 herantransportierten Produkte 8. In dieser Aufnahmeposition liegen die einzelnen Übergabeelemente 16 vorzugsweise eng aneinander, können aber auch einen gewissen Abstand zueinander besitzen. In Fig. 10 ist die Abgabeposition dargestellt, in der die Übergabeelemente 16 einen größeren vorbestimmten Abstand zueinander aufweisen als in der Aufnahmeposition.

In jedem Fall ist es vorteilhaft, dass die Übergabeelemente 16 miteinander verbunden sind. In der dargestellten Ausführungsform wird die Verbindung zwischen zwei benachbarten Übergabeelementen 16 über Spreizlaschen 30 hergestellt, welche jeweils fest mit einem der beiden Übergabeelemente 16, welche sie verbinden, verbunden sind. Die Spreizlaschen weisen Langlöcher 32 auf, in denen jeweils mindestens ein Stift 34 geführt ist, der jeweils an demjenigen der beiden Übergabeelemente 16 befestigt ist, welches nicht fest mit der Spreizlasche 30 verbunden ist. Auf diese Weise wird der maximale Abstand zwischen zwei Übergabeelementen 16 vordefiniert. Ebenso ist es denkbar, die Spreizlaschen 30 als bewegliche Elemente auszubilden, welche fest mit beiden Übergabeelementen 16, welche sie verbinden, verbunden sind. In diesem Fall entfallen Langlöcher 32 und Stifte 34. Eine Vielzahl weiterer Verbindungsmöglichkeiten ist denkbar.

Mittels eines Antriebs sind die einzelnen Übergabeelemente 16 nun zwischen der Aufnahmeposition und der Abgabeposition bewegbar. Dabei ist es in der Ausgestaltung gemäß Fig. 9 und 10 lediglich notwendig, das innerste Übergabeelement 16 stationär zu halten und das äußerste Übergabeelement 16 nach außen hin zu verschieben. Dadurch werden die Übergabeelemente 16 nacheinander kaskadenförmig aufgefächert bzw. wieder zusammengezogen.

In Fig. 11 ist ein Beispiel der Abführeinheit 6 dargestellt. Die Abführeinheit 6 weist dabei mindestens einen Greifer 38 auf, welcher einen Blisterstreifen 8 oder eine Mehrzahl von Blisterstreifen 8 gleichzeitig ergreifen kann. Selbstverständlich ist eine Vielzahl anderer Abführeinheiten 6 denkbar, etwa Förderbänder, Sauggreifer etc.

Die Zuführeinheit 2 kann abhängig von den zu fördernden Produkten 8 ebenfalls mit Saugnäpfen ausgestattet sein oder andere Ausgestaltungen aufweisen. Die Übergabeelemente 16 der Spreizvorrichtung 4 müssen nicht als Auflageflächen dienen, sondern die Produkte können beispielsweise auch hängend, etwa mittels Vakuum, befestigt sein. Außerdem ist eine beliebige Ausgestaltung der Übergabeelemente 16 hinsichtlich der Form der zu übergebenden Produkte 8 möglich.

## Patentansprüche

1. Vorrichtung zur Übergabe von Produkten (8), insbesondere streifenförmigen Produkten, mit einer Zuführeinheit (2) und einer Abführeinheit (6),
**dadurch gekennzeichnet, dass**
die Vorrichtung zwischen der Zuführeinheit (2) und der Abführeinheit (6) eine Spreizvorrichtung (4) aufweist, wobei die mittels der Zuführeinheit (2) zur Spreizvorrichtung (4) geförderten Produkte (8) an die Abführeinheit (6) abgebbar sind, und dass
die Spreizvorrichtung (4) eine Mehrzahl von nebeneinander angeordneten Übergabeelementen (16) aufweist, welche zwischen einer Aufnahmeposition zur Aufnahme der von der Zuführeinheit (2) geförderten Produkte (8) und einer Abgabeposition zur Abgabe der Produkte (8) an die Abführeinheit (6) derart bewegbar sind, dass benachbarte Übergabeelemente (16) in der Abgabeposition einen größeren vorbestimmten Abstand zueinander aufweisen als in der Aufnahmeposition.

2. Vorrichtung nach Anspruch 1, **dadurch gekennzeichnet, dass** die Übergabeelemente (16) als sich in einer Längsrichtung erstreckende Übergabeleisten ausgebildet sind.

3. Vorrichtung nach Anspruch 2, **dadurch gekennzeichnet, dass** jede Übergabeleiste (16) eine sich in der Längsrichtung erstreckende Nut (18) und zwei sich in der Längsrichtung erstreckende seitliche Stege (20) aufweist.

4. Vorrichtung nach einem der vorangehenden Ansprüche, **dadurch gekennzeichnet, dass** die Spreizvorrichtung (4) Mittel (22, 24) zum Ausbilden eines Vakuums aufweist, die zum Festhalten der Produkte (8) an den Übergabeelementen (16) dienen.

5. Vorrichtung nach Anspruch 4, **dadurch gekennzeichnet, dass** jedem Übergabeelement (16) eigene Mittel (22, 24) zum Ausbilden eines Vakuums zugeordnet sind.

6. Vorrichtung nach einem der vorangehenden Ansprüche, **dadurch gekennzeichnet, dass** die Übergabeelemente (16) miteinander verbunden sind.

7. Vorrichtung nach Anspruch 6, **dadurch gekennzeichnet, dass** jeweils zwei benachbarte Übergabeelemente (16) über Spreizlaschen (30) miteinander verbunden sind.

8. Vorrichtung nach Anspruch 7, **dadurch gekennzeichnet, dass** die Spreizlaschen (30) Langlöcher (32) aufweisen und die Übergabeelemente (16) mindestens einen Stift (34) aufweisen, der im jeweiligen Langloch (32) geführt ist.

9. Vorrichtung nach einem der Ansprüche 6 bis 8, **dadurch gekennzeichnet, dass** die Übergabeelemente (16) mittels eines Antriebs bewegbar sind, der dazu geeignet ist, die beiden äußersten Übergabeelemente (16) relativ zueinander zu bewegen.

10. Vorrichtung nach einem der vorangehenden Ansprüche, **dadurch gekennzeichnet, dass** die Spreizvorrichtung (4) schwenkbar ausgebildet ist.

11. Vorrichtung nach einem der vorangehenden Ansprüche, **dadurch gekennzeichnet, dass** die Zuführeinheit (2) einen Zangenvorschub aufweist.

12. Vorrichtung nach einem der vorangehenden Ansprüche, **dadurch gekennzeichnet, dass** die Abführeinheit (6) mindestens einen Greifer (38) aufweist.

13. Verfahren zum Übergeben von Produkten (8) mit folgenden Schritten:
- Zuführen der Produkte (8) mittels einer Zuführeinheit (2) zu einer Spreizvorrichtung (4);
- Auseinanderbewegen der Produkte (8) in der Spreizvorrichtung (4) durch Auseinanderbewegen von nebeneinander angeordneten Übergabeelementen (16); und
- Abführen der Produkte (8) mittels einer Abführeinheit (6).
